# EUROPEAN PATENT SPECIFICATION

(11) **EP 4 187 149 B1**
(45) Date of publication and mention of the grant of the patent: **24.09.2025**
(21) Application number: 21210512.6
(22) Date of filing: 25.11.2021
(51) Int. Cl.: F23C 10/00, F23H 7/00

(54) **FLUIDIZED BED REACTOR AND METHOD FOR OPERATING THE FLUIDIZED BED REACTOR**
WIRBELSCHICHTREAKTOR UND VERFAHREN ZUM BETRIEB DES WIRBELSCHICHTREAKTORS
RÉACTEUR À LIT FLUIDISÉ ET PROCÉDÉ DE FONCTIONNEMENT DU RÉACTEUR À LIT FLUIDISÉ

(43) Date of publication of application: 31.05.2023
(73) Proprietor: Doosan Lentjes GmbH, 40880 Ratingen (DE)
(72) Inventor: BROSCH, Björn, 45136 Essen (DE); KRUSCH, Sebastian, 44892 Bochum (DE); GANDHI, Bhavik, 40878 Ratingen (DE); GORAL, Damian, 41-200 Sosnowiec (PL); LEUSCHKE, Frank, 47918 Tönsivorst (DE); NARIN, Oguzhan, 45549 Sprockhövel (DE)
(74) Representative: Feucker, Max Martin

(56) References cited:
- US-A- 4 828 486
- US-A- 5 218 932
- US-A- 5 443 022

## Description

The present invention relates to a fluidized bed reactor and in particular to a fluidized apparatus and to a method for operating such a fluidized bed reactor. Hereinafter terms like "upper", "lower", "horizontal", "vertical", "inner" etc. always refer to a regular used position of the fluidized bed reactor. A fluidized bed apparatus typically comprises a fluidized bed reactor, which walls can be made of tubes, through which water runs, wherein said tubes are either welded directly to each other to provide a wall structure or with fins/ribs between parallel running tube sections. The wall of the fluidized bed reactor may also be made of bricks or bricks in combination with tubes.

The fluidized bed reactor comprises a reaction chamber for particulate matter, wherein the reaction chamber has at least one particulate matter inlet for the particulate matter and at least one primary particulate matter outlet for the particulate matter. The fluidized bed reactor further comprises a fluidizing grate as part of a fluidizing bottom at the bottom of the reaction chamber, wherein the fluidizing grate has multiple openings for an operating fluid to fluidize particulate matter above the fluidizing grate within the reaction chamber.

Typically, the reaction chamber of such a fluidized bed reactor has at least one operating fluid outlet at its upper end, wherein said operating fluid outlet allows a mixture of gases and solid particles (hereinafter called particulate matter) exhausted from the reaction chamber to flow into at least one separator.

The separator serves to disengage the gases and particulate matter. Thereafter the separated reaction gases and the particulate matter are treated separately. The particulate matter may be directly returned into the reaction chamber.

The general design of a circulating fluidized bed apparatus and its components is disclosed in EP 0 495 296 A2.

The general process engineering of this type of a fluidized bed apparatus is more or less defined and includes:
- providing the particulate matter via an inlet opening into the reaction chamber,
- fluidizing the particulate matter by a (operating) gas, introduced under pressure via a fluidizing grate, which may comprise respective nozzles and/or a grate in the grate area of the reaction chamber,
- eventually transferring the energy (heat) produced in the fluidized bed via heat transfer elements (in particular tubes through which a heat transfer fluid like water or steam flows), arranged in or adjacent to the reaction chamber or transferring the energy from the reaction gases having left the reaction chamber. If an endothermic reaction shall occur, heat may be provided to the reaction chamber via the heat transfer elements.

Depending on the velocity of the provided operating fluid the fluidized bed can be embodied as stationary, bubbling or circulating fluidized bed.

US 2009/0072538 A teaches that a first fluidized bed apparatus is used as an oxidation reactor, in which particulate metal is combusted with an oxidizing agent provided through the fluidizing grate and that a second fluidized bed apparatus is used as a reduction reactor, in which particulate metal oxide is reduced by providing a reducing agent through the fluidizing grate of the second fluidized bed apparatus. This system of a combination of the reduction reactor and oxidation reactor is used to drive a turbine for generating electricity, wherein the produced carbon dioxide is stored under high pressure. US 4,828,486 and US 5,443,022 each disclose a fluidized bed reactor with the features of the preamble of claim 1.

Furthermore, it is known to store energy in form of particulate matter comprising mainly particulate metal, when there is a surplus of electrical energy from renewable energy sources. If there is a surplus, an electrolysis unit is run with the electrical energy to produce hydrogen and oxygen. The hydrogen is used for a reduction reaction with solid particulate metal, which is for example embodied by granulate or pellets comprising metal (oxide), for example by iron ore or iron ore pellets. The thus treated (reduced) particulate metal can be stored as bulk material in a bunker, stock pile or the like. When energy is needed, the reduced particulate meal can be oxidized, wherein the thermal energy derived from this exothermal oxidation reaction can be further used for heating or producing electrical energy. Accordingly, systems are known, in which the particulate metal is run in a closed loop with a reduction reaction and an oxidation reaction. For example, EP 3 617 591 B1 suggests to arrange a reaction chamber and a combustion chamber close to an electrolysis unit for storing electrical energy, when there is a surplus of electrical energy. WO 2021/165441 A1 even suggests using the same fluidized bed apparatus for the reduction reaction and for the oxidation reaction. In many applications it is desired to have a well defined residence / reaction time of particulate matter fed into the reaction reactor, which can vary according to the process (e.g. between less than 30 seconds up to 2 hours).

Against this background, it is an object of the present invention to provide a fluidized bed reactor and a method for operating a fluidized bed reactor, with which the particulate matter can be withdrawn after a well defined residence time without interrupting the reaction process.

This object is achieved with a fluidized bed reactor and a method for operating a fluidized bed reactor with the features of the respective independent claim. Preferred embodiments of the fluidized bed reactor and the method are subject matter of the dependent claims and the description, wherein single features of the preferred embodiments can be combined with each other in a technically meaningful manner. Features disclosed with regard to the method can be applied to the fluidized bed reactor and vice versa.

The object is in particular achieved with a fluidized bed reactor, comprising a reaction chamber for particulate matter, the reaction chamber having at least one particulate matter inlet for the particulate matter and at least one primary particulate matter outlet for the particulate matter, and a fluidizing grate having multiple openings for an operating fluid to fluidize particulate matter above the fluidizing grate, wherein the fluidizing grate is extending with an inclination from the at least one particulate matter inlet to the at least one primary particulate matter outlet, wherein a fluidizing bottom comprising the fluidizing grate comprises at least two fluidization fields, wherein adjacent fluidization fields are separated by at least one weir arranged above the fluidizing grate.

The object is also achieved by a method for operating a fluidized bed reactor, comprising the following steps:
- Providing particulate matter through the at least one particulate matter inlet into the reaction chamber,
- Providing a reducing or an oxidizing agent as operating fluid through the multiple openings of the fluidizing grate to the at least two fluidization fields to fluidize the particulate matter within the reaction chamber,
- Withdrawing reduced particulate matter through at least one primary particulate matter outlet, wherein
an average horizontal velocity of the particulate matter from the particulate matter inlet to the primary particulate matter outlet is controlled with fluidization properties of the fluidization fields.

With other word, the present invention suggests to arrange the fluidizing grate with an inclination with regard to the horizon, so that the operating fluid, which is provided through the fluidizing grate and which fluidizes the particulate matter, impinges the entirety of the particulate matter with a momentum that has a component in the horizontal direction, so that the particulate matter is advanced from the at least one particulate matter inlet at one side of the reaction chamber to the at least one primary particulate matter outlet at the opposite side of the reaction chamber. By impinging the entirety of the particulate matter with a momentum in the horizontal direction the fluidized bed reactor can be continuously fed with particulate matter, which particulate matter is continuously advanced from the particulate matter inlet to the primary particulate matter outlet. Depending on the magnitude of the angle of inclination the residence time (and therefore the reaction time) of particulate matter provided through the particulate matter inlet to the primary particulate matter outlet can be set. The inclination of the fluidizing grate may be more than 1°, preferably more than 5° and most preferably more than 10°. The inclination of the fluidizing grate to the horizon may be less than 40°, preferably less than 30° and most preferably less than 25°. The greater the inclination of the fluidizing grate to the horizon, the shorter is the residence time of particulate matter in the reaction chamber. Accordingly, the present invention provides a technical teaching with which the average residence time of particulate matter within the reaction chamber can be shortened.

In order to provide a fluidizing grate with an inclination the whole reaction chamber may be arranged with an inclination with regard to the horizon. In this case, a known reaction chamber as a whole is mounted in a tilted way.

Alternatively, the fluidizing grate within the reaction chamber may be inclined with regard to the horizon.

In any case, in an operating state an end of the fluidizing grate assigned to the particulate matter inlet is arranged higher than an end of the fluidizing grate assigned to the primary particulate matter outlet, so that the fluidizing grate extends downwards from the particulate matter inlet to the primary particulate matter outlet with an inclination. The fluidizing grate generally extends in an inclined plane, wherein it is not ruled out that the lateral ends, front end/or rear end of the fluidizing grate is bend upwards, as long as the particulate matter is advanced from the particulate matter inlet to the primary particulate matter outlet due to the overall inclination of the fluidizing grate. It is also possible that the fluidizing grate is formed with steps or in a stairway manner for embodying the inclination.

In order to embody the invention, it is sufficient, that the fluidizing grate is stationary arranged with an inclination. Accordingly, once the fluidized bed reactor is mounted at its operation site, the inclination is set to a specific value.

Nevertheless, for a further embodiment of the invention it is suggested that the fluidizing grate is mounted movable in the reaction chamber in such a way that the inclination of the fluidizing grate can be altered. In this case, the inclination of the fluidizing grate with regard to the horizon can be altered during operation or between two operation cycles. This way, the averaged residence time (or averaged dwell time) of the particulate matter provided through the particulate matter inlet can be changed. In this embodiment it is also possible to align the movably mounted fluidizing grate horizontally, so that there is no inclination of the fluidizing grate. In this case, the reaction chamber may be operated as an already known reaction chamber with a fluidizing grate having no inclination.

In order to alter the inclination of the fluidizing grate the fluidized bed reactor may comprise a drive connected to the fluidizing grate, wherein the drive may be embodied as hydraulic, pneumatic, electro mechanic or manual mechanic drive.

In this regard, it is preferred, that the fluidizing grate is mounted to be tilted about one tilt axis, wherein the inclination of the fluidizing grate can be altered by tilting the fluidizing grate about the one tilt axis. With other words, in this case the fluidizing grate can be swiveled or pivoted around exactly one axis. In this case only one drive is necessary to alter the inclination of the fluidizing grate.

In a specific embodiment, the tilt axis may be arranged at a front side wall of the reaction chamber, which front side wall is assigned to the at least one particulate matter inlet, wherein the tilt axis extends along the front side wall. Preferably, the tilt axis is arranged below the at least one particulate matter inlet, which may be arranged within the front side wall or at the end(s) of lateral side walls near the front side wall. In this case, there may be a predefined distance between the particulate matter inlet and the front of the inclined fluidizing grate.

In a preferred embodiment the reaction chamber has a rectangular cross section. In this case, the reaction chamber is preferably delimited by a front side wall, a back side wall and two lateral side walls. The at least one particulate matter inlet is arranged in the front side wall and/or in at least one of the lateral side walls close to the front side wall. The at least one primary particulate matter outlet is arranged in the back side wall and/or in at least one of the lateral side walls near the back side wall. In this case the inclined fluidizing grate has also a rectangular shape.

In order to support the overall movement of the particulate matter from the particulate matter inlet to the primary particulate matter outlet and/or in order to adjust the fluidization and therewith the reaction properties the fluidizing bottom comprising the fluidizing grate comprises at least two, preferably at least three and more preferably at least four fluidization fields, which are in particular arranged behind each other in the direction from the particulate matter inlet to the primary particulate matter outlet. For example, the different fluidization fields may differ from each other with regard to their openings/nozzles (for example in size, amount and/or arrangement).

Additionally or alternatively, each fluidizing field may be assigned to a separate inlet for the operating fluid, so that the properties of the operating fluid (for example flow rate, flow velocity, composition and/or effective concentration of the reducing/oxidizing gas or similar) provided to each fluidization field can be controlled independently. In particular, it is preferred that the composition of the operating fluid provided to one fluidization field differs from the composition of the operating fluid provided to another fluidization field. This way, the fluidization of the fluidization fields may be changed during operation.

In this regard, according to the present invention adjacent fluidization fields (at least in the direction from the particulate matter inlet to the primary particulate matter outlet) are separated by at least one weir, which weir is arranged above the fluidizing grate. The respective weir may be embodied in such a way that the weir can be overflown and/or underflown by the fluidized particulate matter. By the geometrical properties (height of the weir and/or gap from the fluidizing grate to the lower edge of the weir) in combination with the inclination and/or in combination with the fluidization properties of the fluidization fields the average horizontal velocity of the particulate matter from the particulate matter inlet to the primary particulate matter outlet can be set/controlled.

It is also suggested, that at least one secondary particulate matter outlet is assigned to one of the fluidization fields. It is also possible that secondary particulate matter outlets are assigned to each fluidization fields, but not to the last fluidization field (as the primary particulate matter outlet is assigned to the last fluidization field). By providing secondary particulate matter outlet(s) for one or for each fluidization field particulate matter can be withdrawn before the particulate matter has flown through the whole length of the reaction chamber. This way it is also possible to withdraw different fractions of particulate matter, which differ from each other with regard to the reaction time with the operating fluid.

The fluidizing grate itself may be embodied as already known fluidizing grate, as long as the fluidizing grate is arranged or can be moved into an inclined way. For example, the fluidizing grate may be made of refractory, wherein the openings may be directly embodied in the refractory bottom, whereas it is also possible, that nozzles are arranged within the refractory to embody the openings for providing the operating fluid. Alternatively, the fluidizing grate may be embodied by a plate comprising the openings or the nozzles having the openings.

The particulate matter may be provided as loose filling within the reaction chamber. Suitable material, which can be processed in the fluidized bed reactor, is particulate matter, which can be fluidized. For example, the particulate matter may be embodied by solid particles (such as granulate, pellets and the like) comprising or consisting of a substance to be treated in the fluidized bed reactor. For example, the particulate matter may be iron ore or iron ore pellets.

The particulate matter may comprise particulate metal oxide. In addition, the particulate matter within the reaction chamber may comprise (preferably inert) carrier material, which does not react with the operating fluid, so that the reaction (for example an oxidation or a reduction) process can be controlled by the ratio of particulate metal (or particulate metal oxide, respectively) and particulate carrier material. The particulate metal oxide could be iron oxide, such as FeO, F₂O, F₃O₄ and Fe₂O₃, zinc oxide, such as ZnO, or magnesium oxide, such as MgO, respectively.

If the particulate matter comprises reduced particulate metal, the metal of the particulate metal is of the following group:
- Iron (Fe), in particular elementary iron,
- Zinc (Zn), in particular elementary zinc,
- Alkali metal, in particular Magnesium (Mg), preferably elementary magnesium.

The operating fluid is preferably a gas, which is supplied to the particulate matter in the reaction chamber.

The operating fluid is preferably embodied as reducing agent for the reduction of the solid particulate matter or its components within the reaction chamber. Accordingly, the operating fluid is of such a composition, that the solid particulate matter or its components performs a (endothermic or eventually even an exothermic) reduction reaction with the reducing agent.

The reducing agent may comprise at least one or exactly one of the following gases, eventually combined with a defined amount of inert carrier gas, such as nitrogen carbon dioxide or similar: gaseous hydrogen, carbon monoxide, synthesis gas, biogas, propane, methane.

Alternatively, the operating fluid might be embodied as oxidizing agent for the oxidization of the solid particulate matter or its components within the reaction chamber. Accordingly, the operating fluid is of such a composition, that the solid particulate matter or its components performs an (exothermic) oxidation reaction with the oxidizing agent. The oxdizing agent may comprise steam, air, or oxygen of variable concentration in combination with inert carrier gas, e,g, nitrogen or carbon dioxide.

The process is highly efficient, as the contact between the particulate matter and the operating fluid (in particular operating gas) is highly efficient within the fluidized bed, whereby also the heat transfer from the fluidized bed to a heat transfer medium or vice versa is highly efficient in a fluidized bed reactor.

The invention also refers to a fluidized bed apparatus, comprising an inventive fluidized bed reactor, wherein the fluidized bed reactor comprises an operating fluid outlet, in particular at its top, which operating fluid outlet is connected to a separator, wherein an outlet for particulate matter of the separator is connected to the at least one particulate matter inlet of the reaction chamber. Thereby, particulate matter leaving the reaction chamber through the operating fluid outlet can be provided back to the reaction chamber. Furthermore, it is possible that an outlet for gaseous components of the separator is connected to the fluidizing grate, so that the separated gaseous components can be recirculated into the reaction chamber.

The particulate matter separator as part of the fluidized bed apparatus may be embodied as cyclone separator or any other suitable separator, wherein the outlet of the particulate matter separator for particulate matter may be connected to the reaction chamber via a returning line. In particular, the outlet of the particulate matter separator for the reaction gas may be connected directly or indirectly to a recirculation line, which recirculation line may be connectable/connected to the fluidizing grate.

Furthermore, a particulate matter feed storage may be connected to the at least one particulate matter inlet of the reaction chamber at the lower section of the reaction chamber preferably near (for example above or below) the fluidizing grate, so that particulate matter can be fed to the fluidized bed reactor. On the other hand, a particulate matter discharge storage may be connected to the at least one primary particulate matter outlet of the reaction chamber at the lower section of the reaction chamber preferably near the fluidizing grate, so that particulate matter can be withdrawn from the fluidized bed reactor after its reaction with the operating fluid.

The invention and the technical background will now be explained with regard to the figures, which show exemplary embodiments of the invention. The figures show
- Figure 1:: a cross sectional view of a first exemplary embodiment of a fluidized bed reactor,
- Figure 2:: a cross sectional view of a second exemplary embodiment of a fluidized bed reactor and
- Figure 3:: a fluidized apparatus with the fluidized bed reactor of figure 2.

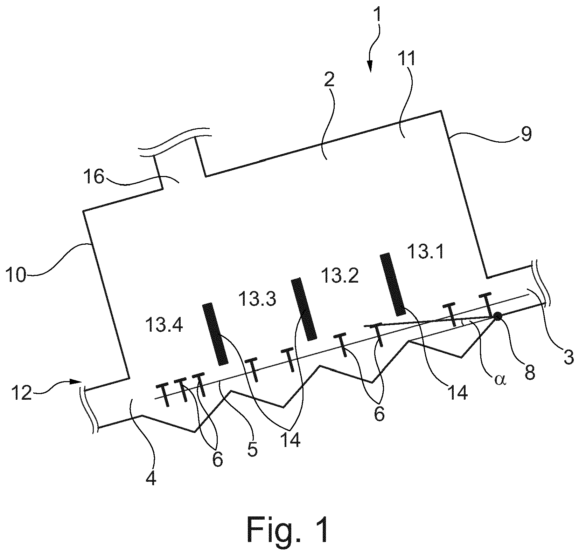

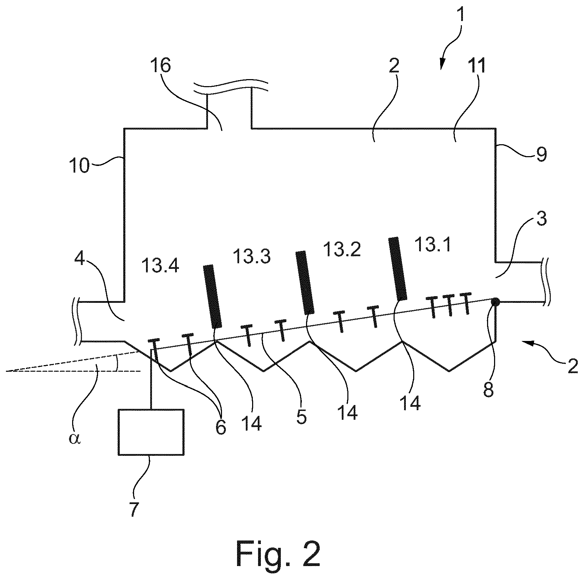

The fluidized bed reactors 1 shown in figures 1 and 2 comprise a reaction chamber 2, which is delimited by a front side wall 9, a rear side wall 10 and lateral side walls 11. The reaction chamber 2 has therefore a rectangular cross section. At least one particulate matter inlet 3 is formed in the front side wall 9, through which particulate matter inlet 3 particulate matter can be supplied into the reaction chamber 2. A primary particulate matter outlet 4 is arranged within the rear side wall 10, through which primary particulate matter outlet 4 particulate matter can be withdrawn from the reaction chamber 2. In the ceiling of the reaction chamber 2 an operating fluid outlet 16 is arranged.

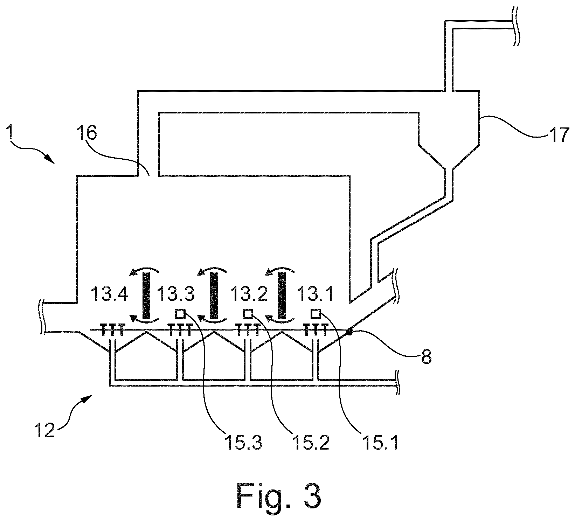

The reaction chamber 2 has a fluidizing bottom 12, which comprises a fluidizing grate 5 with multiple nozzles 6. Weirs 14 are arranged on top of the fluidizing grate 5, which weirs 14 can be overflown or underflown by particulate matter. The weirs 14 separate the fluidizing grate 5 in fluidizing fields 13.1, 13.2, 13.3 and 13.4. An operating fluid may be provided through the fluidizing bottom 12 to each fluidizing field 13.1, 13.2, 13.3 and 13.4, wherein the operating fluid may be controlled independently for each fluidizing field. As indicated in figure 3, secondary particulate matter outlets 15.1, 15.2 and 15.3 in the lateral side wall 11 may be assigned to each of the first fluidizing fields 13.1, 13.2, 13.3.

When an operating gas is provided to the fluidizing bottom12 the particulate matter in the reaction chamber 2 is fluidized, wherein an efficient reaction of the operating gas with (components of) the particulate matter may occur.

The fluidized bed reactor 1 shown in figure 1 is as a whole inclined with an angle α to the horizon. This way, also the fluidizing grate 5 is arranged with an inclination α to the horizon.

The fluidized bed reactor of figure 2 is arranged in an usual manner, wherein the fluidizing grate 5 is arranged within the reaction chamber 2 with an inclination α to the horizon. The fluidizing grate 5 of the embodiment of figure 2 is mounted in a movable way, so that the fluidizing grate 5 can be tilted/pivoted around a tilt axis 8, which tilt axis 8 extends into the plane of the figure and therefore along the front side wall 9. The fluidizing grate 5 is connected to a drive 7, with which the inclination α of the fluidizing grate 5 can be altered.

By arranging the fluidizing grate 5 with an inclination α the entirety of the particulate matter supplied through the particulate matter inlet 3 is impinged with a momentum in the horizontal direction (in the figures from right to left), so that the particulate matter is continuously advanced from the particulate matter inlet 3 towards the primary particulate matter outlet 4. Accordingly, the residence time/dwell time/reaction time (the average time which particulate matter needs to travel from the particulate matter inlet 3 to the primary particulate matter outlet 4) can be set by the angle of inclination α. Accordingly, by providing an inclination to the fluidizing grate 5 the dwell time is reduced. By having different degrees of fluidization in the different fluidizing fields 13.1 to 13.4 the reaction time of the particulate matter with the operating fluid provided to the fluidizing bottom 12 can be further affected.

As can be seen from figure 3 the fluidized bed reactor 1 may be part of a fluidized bed apparatus, which comprises a separator 17, which separator 17 is connected to the operating fluid outlet of the reaction chamber 2. Particulate matter separated in separator 17 may be returned to the particulate matter inlet 3, whereas gaseous components separated in the separator 17 may be recirculated to the fluidizing bottom 12.

In a preferred embodiment the particulate matter comprises particulate metal oxide, which is reduced by a reducing agent supplied to the fluidizing bottom 12. For example, gaseous hydrogen, carbon monoxide, synthesis gas, biogas, propane or methane may be provided as reducing agent. Alternatively, other particulate matter may be provided to the reaction chamber 2 in order to perform a short reduction reaction in the reaction chamber 2.

### List of reference number

- α: inclination
- 1: fluidized bed reactor
- 2: reaction chamber
- 3: particulate matter inlet
- 4: primary particulate matter outlet
- 5: fluidizing grate
- 6: nozzle
- 7: drive
- 8: tilt axis
- 9: front side wall
- 10: rear side wall
- 11: lateral side wall
- 12: fluidizing bottom
- 13.1, 13.2, 13.3, 13.4: fluidizing field
- 14: weir
- 15.1, 15.2, 15.3: secondary particulate matter outlet
- 16: operating fluid outlet
- 17: separator

## Claims

1. Fluidized bed reactor (1) comprising
- a reaction chamber (2) for particulate matter, the reaction chamber (2) having at least one particulate matter inlet (3) for the particulate matter and at least one primary particulate matter outlet (4) for the particulate matter, and
- a fluidizing grate (5) having multiple openings (6) for an operating fluid to fluidize particulate matter above the fluidizing grate (5), wherein
the fluidizing grate (5) is extending with an inclination (α) from the at least one particulate matter inlet (3) to the at least one primary particulate matter outlet (4),
**characterized in that**
a fluidizing bottom (12) comprising the fluidizing grate (5) comprises at least two fluidization fields (13.1, 13.2, 13.3, 13.4), wherein adjacent fluidization fields (13.1, 13.2, 13.3, 13.4) are separated by at least one weir (14) arranged above the fluidizing grate (5).

2. Fluidized bed reactor (1) according to claim 1, wherein the fluidizing grate (5) is mounted movable in the reaction chamber (2) in such a way that the inclination (α) of the fluidizing grate (5) can be altered.

3. Fluidized bed reactor (1) according to claim 2, comprising at least one hydraulic, pneumatic, electro mechanic or mechanic drive (7) connected to the fluidizing grate to alter the inclination.

4. Fluidized bed reactor (1) according to claim 2 or 3, wherein one tilt axis (8) is embodied and wherein the inclination (α) of the fluidizing grate (5) can be altered by tilting the fluidizing grate (5) about the one tilt axis (8).

5. Fluidized bed reactor (1) according to claim 4, wherein the tilt axis (8) is arranged at a front side wall (9) of the reaction chamber (1) and extends along the front side wall (9).

6. Fluidized bed reactor (1) according to one of the preceding claims, wherein the reaction chamber (2) has at least one secondary particulate matter outlet (15.1, 15.2, 15.3) assigned to one of the fluidization fields (13.1, 13.2, 13.3).

7. Fluidized bed reactor (1) according to one of the preceding claims, wherein the fluidizing grate (5) comprises nozzles (6) embodying the opening(s) for the operating fluid.

8. Fluidized bed reactor (1) according to one of the preceding claims, wherein a fluidizing bottom (12) comprising the fluidizing grate (5) is connected to a reducing or an oxidizing agent supply as source for the operating fluid.

9. Fluidized bed apparatus, comprising a fluidized bed reactor (1) according to one of the preceding claims, wherein the fluidized bed reactor (1) comprises an operating fluid outlet (16) connected to a separator (17), wherein an outlet for particulate matter of the separator (17) is connected to the at least one particulate matter inlet (3) of the reaction chamber (2).

10. Method for operating a fluidized bed reactor (1) according to claims 1 to 8, comprising the following steps:
- Providing particulate matter through the at least one particulate matter inlet (3) into the reaction chamber (2),
- Providing a reducing or an oxidizing agent as operating fluid through the multiple openings (6) of the fluidizing grate (5) to the at least two fluidization fields (13.1, 13.2, 13.3, 13.4) to fluidize the particulate matter within the reaction chamber (2),
- Withdrawing reduced particulate matter through at least one primary particulate matter outlet (4), wherein
an average horizontal velocity of the particulate matter from the particulate matter inlet (3) to the primary particulate matter outlet (4) is controlled with fluidization properties of the fluidization fields (13.1, 13.2, 13.3, 13.4).

11. Method according to claim 10, wherein the inclination of the fluidizing grate (5) is altered.

12. Method according to one of claims 10 to 11, wherein reduced particulate matter is withdrawn through a secondary particulate matter outlet (15.1, 15.2, 15.3) assigned to one of the multiple fluidization fields (13.1, 13.2, 13.3, 13.4).

13. Method according to one of claims 10 to 12, wherein the reducing agent is at least one of the following: gaseous hydrogen, carbon monoxide, synthesis gas, biogas, propane, methane.

## Patentansprüche

1. Wirbelschichtreaktor (1), umfassend
- eine Reaktionskammer (2) für Feststoffpartikel, wobei die Reaktionskammer (2) mindestens einen Feststoffpartikeleinlass (3) für die Feststoffpartikel und mindestens einen primären Feststoffpartikelauslass (4) für die Feststoffpartikel aufweist, und
- einen Fluidisierungsrost (5) mit mehreren Öffnungen (6) für ein Betriebsfluid zum Fluidisieren der Feststoffpartikel oberhalb des Fluidisierungsrostes (5), wobei
der Fluidisierungsrost (5) sich mit einer Neigung (α) von dem mindestens einen Feststoffpartikeleinlass (3) zu dem mindestens einen primären Feststoffpartikelauslass (4) erstreckt,
**dadurch gekennzeichnet, dass**
ein Fluidisierungsboden (12), der den Fluidisierungsrost (5) umfasst, mindestens zwei Fluidisierungsfelder (13.1, 13.2, 13.3, 13.4) umfasst, wobei benachbarte Fluidisierungsfelder (13.1, 13.2, 13.3, 13.4) durch mindestens ein Wehr (14) getrennt sind, das oberhalb des Fluidisierungsrostes (5) angeordnet ist.

2. Wirbelschichtreaktor (1) nach Anspruch 1, wobei der Fluidisierungsrost (5) in der Reaktionskammer (2) derart beweglich gelagert ist, dass die Neigung (α) des Fluidisierungsrostes (5) verändert werden kann.

3. Wirbelschichtreaktor (1) nach Anspruch 2, mit mindestens einem hydraulischen, pneumatischen, elektromechanischen oder mechanischen Antrieb (7), der mit dem Fluidisierungsrost verbunden ist, um die Neigung zu verändern.

4. Wirbelschichtreaktor (1) nach Anspruch 2 oder 3, wobei eine Kippachse (8) ausgebildet ist und wobei die Neigung (α) des Fluidisierungsrostes (5) durch Kippen des Fluidisierungsrostes (5) um die eine Kippachse (8) veränderbar ist.

5. Wirbelschichtreaktor (1) nach Anspruch 4, wobei die Kippachse (8) an einer vorderen Seitenwand (9) der Reaktionskammer (1) angeordnet ist und sich entlang der vorderen Seitenwand (9) erstreckt.

6. Wirbelschichtreaktor (1) nach einem der vorhergehenden Ansprüche, **dadurch gekennzeichnet, dass** die Reaktionskammer (2) mindestens einen sekundären Feststoffpartikelauslass (15.1, 15.2, 15.3) aufweist, der einem der Fluidisierungsfelder (13.1, 13.2, 13.3) zugeordnet ist.

7. Wirbelschichtreaktor (1) nach einem der vorhergehenden Ansprüche, wobei der Fluidisierungsrost (5) Düsen (6) umfasst, die die Öffnung(en) für das Betriebsfluid ausbilden.

8. Wirbelschichtreaktor (1) nach einem der vorhergehenden Ansprüche, wobei ein Fluidisierungsboden (12), der den Fluidisierungsrost (5) umfasst, mit einer Reduktions- oder Oxidationsmittelzufuhr als Quelle für das Betriebsfluid verbunden ist.

9. Wirbelschichtanlage, umfassend einen Wirbelschichtreaktor (1) nach einem der vorhergehenden Ansprüche, wobei der Wirbelschichtreaktor (1) einen Betriebsfluidauslass (16) umfasst, der mit einem Abscheider (17) verbunden ist, wobei ein Auslass für Feststoffpartikel des Abscheiders (17) mit dem mindestens einen Feststoffpartikeleinlass (3) der Reaktionskammer (2) verbunden ist.

10. Verfahren zum Betreiben eines Wirbelschichtreaktors (1) nach einem der Ansprüche 1 bis 8, umfassend die folgenden Schritte:
- Zuführen von Feststoffpartikeln durch den mindestens einen Feststoffpartikeleinlass (3) in die Reaktionskammer (2),
- Zuführen eines Reduktions- oder Oxidationsmittels als Betriebsfluid durch die mehreren Öffnungen (6) des Fluidisierungsrostes (5) in die mindestens zwei Fluidisierungsfelder (13.1, 13.2, 13.3, 13.4), um die Feststoffpartikel in der Reaktionskammer (2) zu fluidisieren,
- Abziehen der reduzierten Feststoffpartikel durch mindestens einen primären Feststoffpartikelauslass (4), wobei
eine durchschnittliche horizontale Geschwindigkeit der Feststoffpartikel vom Feststoffpartikeleinlass (3) zum primären Feststoffpartikelauslass (4) mit Fluidisierungseigenschaften der Fluidisierungsfelder (13.1, 13.2, 13.3, 13.4) gesteuert wird.

11. Verfahren nach Anspruch 10, wobei die Neigung des Fluidisierungsrostes (5) verändert wird.

12. Verfahren nach einem der Ansprüche 10 bis 11, wobei die reduzierten Feststoffpartikel über einen sekundären Feststoffpartikelauslass (15.1, 15.2, 15.3) abgezogen werden, der einem der mehreren Fluidisierungsfeldern (13.1, 13.2, 13.3, 13.4) zugeordnet ist.

13. Verfahren nach einem der Ansprüche 10 bis 12, wobei das Reduktionsmittel mindestens eines der Folgenden ist: gasförmiger Wasserstoff, Kohlenmonoxid, Synthesegas, Biogas, Propan, Methan.

## Revendications

1. Réacteur à lit fluidisé (1) comprenant
- une chambre de réaction (2) pour de la matière particulaire, la chambre de réaction (2) ayant au moins une entrée de matière particulaire (3) pour la matière particulaire et au moins une sortie principale de matière particulaire (4) pour la matière particulaire, et
- une grille de fluidisation (5) ayant plusieurs ouvertures (6) pour qu'un fluide de travail fluidise de la matière particulaire au-dessus de la grille de fluidisation (5), dans lequel
la grille de fluidisation (5) s'étend avec une inclinaison (α) à partir de l'au moins une entrée de matière particulaire (3) vers l'au moins une sortie principale de matière particulaire (4), **caractérisé en ce qu'**un fond de fluidisation (12) comprenant la grille de fluidisation (5) comprend au moins deux champs de fluidisation (13.1, 13.2, 13.3, 13.4), dans lequel des champs de fluidisation (13.1, 13.2, 13.3, 13.4) adjacents sont séparés par au moins un déversoir (14) agencé au-dessus de la grille de fluidisation (5).

2. Réacteur à lit fluidisé (1) selon la revendication 1, dans lequel la grille de fluidisation (5) est montée mobile dans la chambre de réaction (2) de telle façon que l'inclinaison (α) de la grille de fluidisation (5) puisse être modifiée.

3. Réacteur à lit fluidisé (1) selon la revendication 2, comprenant au moins un entraînement hydraulique, pneumatique, électromécanique ou mécanique (7) connecté à la grille de fluidisation pour modifier l'inclinaison.

4. Réacteur à lit fluidisé (1) selon la revendication 2 ou 3, dans lequel un axe de bascule (8) est enchâssé et dans lequel l'inclinaison (α) de la grille de fluidisation (5) peut être modifiée en basculant la grille de fluidisation (5) sur l'un axe de bascule (8).

5. Réacteur à lit fluidisé (1) selon la revendication 4, dans lequel l'axe de bascule (8) est agencé sur une paroi latérale avant (9) de la chambre de réaction (1) et s'étend le long de la paroi latérale avant (9).

6. Réacteur à lit fluidisé (1) selon l'une des revendications précédentes, dans lequel la chambre de réaction (2) présente au moins une sortie secondaire de matière particulaire (15.1, 15.2, 15.3) assignée à l'un des champs de fluidisation (13.1, 13.2, 13.3, 13.4).

7. Réacteur à lit fluidisé (1) selon l'une des revendications précédentes, dans lequel la grille de fluidisation (5) comprend des buses (6) enchâssant la ou les ouverture(s) pour le fluide de travail.

8. Réacteur à lit fluidisé (1) selon l'une des revendications précédentes, dans lequel un fond fluidisé (12) comprenant la grille de fluidisation (5) est connecté à une source d'agent réducteur ou oxydant en tant que source pour le fluide de travail.

9. Appareil à lit fluidisé, comprenant un réacteur à lit fluidisé (1) selon l'une des revendications précédentes, dans lequel le réacteur à lit fluidisé (1) comprend une sortie de fluide de travail (16) connectée à un séparateur (17), dans lequel une sortie pour de la matière particulaire du séparateur (17) est connectée à l'au moins une entrée de matière particulaire (3) de la chambre de réaction (2).

10. Procédé de fonctionnement d'un réacteur à lit fluidisé (1) selon les revendications 1 à 8, comprenant les étapes suivantes :
- fournir de la matière particulaire à travers l'au moins une entrée de matière particulaire (3) jusque dans la chambre de réaction (2),
- fournir un agent réducteur ou oxydant en tant que fluide de travail à travers les ouvertures multiples (6) de la grille de fluidisation (5) aux au moins deux champs de fluidisation (13.1, 13.2, 13.3, 13.4) pour fluidiser la matière particulaire à l'intérieur de la chambre de réaction (2),
- retirer la matière particulaire réduite à travers au moins une sortie principale de matière particulaire (4), dans lequel
une vitesse horizontale moyenne de la matière particulaire de l'entrée de matière particulaire (3) à la sortie principale de matière particulaire (4) est commandée avec des propriétés de fluidisation des champs de fluidisation (13.1, 13.2, 13.3, 13.4).

11. Procédé selon la revendication 10, dans lequel l'inclinaison de la grille de fluidisation (5) est modifiée.

12. Procédé selon l'une des revendications 10 à 11, dans lequel de la matière particulaire réduite est retirée à travers une sortie secondaire de matière particulaire (15.1, 15.2, 15.3) assignée à un des multiples champs de fluidisation (13.1, 13.2, 13.3, 13.4).

13. Procédé selon l'une des revendications 10 à 12, dans lequel l'agent réducteur est au moins un des suivants : hydrogène gazeux, monoxyde de carbone, gaz de synthèse, biogaz, propane, méthane.
